**Europäisches Patentamt**

**European Patent Office**

**Office européen des brevets**

(19)

(11) Numéro de publication: **0 026 705**
**B1**

(12) # FASCICULE DE BREVET EUROPEEN

(45) Date de publication du fascicule du brevet:
**30.05.84**

(51) Int. Cl.³: **G 21 C 15/18**

(21) Numéro de dépôt: **80401358.9**

(22) Date de dépôt: **24.09.80**

(54) Dispositif de refroidissement de secours du coeur d'un réacteur à eau pressurisée.

(30) Priorité: **02.10.79 FR 7924495**

(43) Date de publication de la demande:
**08.04.81 Bulletin 81/14**

(45) Mention de la délivrance du brevet:
**30.05.84 Bulletin 84/22**

(84) Etats contractants désignés:
**BE DE GB IT NL SE**

(56) Documents cités:
**FR - A - 2 268 333**
**GB - A - 887 252**
**US - A - 3 431 168**
**US - A - 3 506 539**
**US - A - 4 051 892**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Fajeau, Maurice, Chemin du Saint Sépulcre,**
**F-84120 Pertuis (FR)**

(74) Mandataire: **Mongrédien, André et al, c/o**
**BREVATOME 25, rue de Ponthieu, F-75008 Paris (FR)**

**0 026 705**

## Description

L'invention concerne un dispositif permettant de ramener rapidement le circuit primaire d'un réacteur nucléaire à froid et sans pression par une décompression volontaire et contrôlée au moyen d'un circuit de décharge en vapeur.

La décharge du circuit primaire peut être commandée manuellement après l'arrêt d'urgence du réacteur notamment lors de la détection d'un danger imminent tel qu'un séisme, un attentat, une guerre, un missile, etc. Lors d'une dépressurisation accidentelle du circuit primaire, l'ouverture de la vanne de décharge peut être commandée automatiquement, par exemple, lorsque la formation d'un niveau libre est détectée dans le haut de la cuve, ce qui permet, d'une part, de diminuer la masse d'eau primaire perdue, jusqu'à complète dépressurisation, d'autre part de faciliter la réinjection d'eau dans la cuve en éliminant la vapeur formée dans le haut de la cuve par la chaleur résiduelle du cœur.

L'invention concerne un perfectionnement à un dispositif de refroidissement du cœur d'un réacteur nucléaire à eau pressurisée, du type dans lequel le cœur du réacteur est disposé à l'intérieur d'une enceinte étanche communiquant par un circuit de refroidissement primaire avec au moins un générateur de vapeur, ce dispositif comprenant une bâche basse pression remplie partiellement d'eau boriquée, une tuyauterie de décharge reliant la partie haute de la cuve à la partie basse de la bâche, la tuyauterie de décharge étant reliée à une rampe de barboteurs disposée dans la partie inférieure de la bâche. Un tel dispositif est connu notamment du document US-A-3 431 168. Selon l'invention, ce dispositif est caractérisé en ce qu'une seconde tuyauterie relie le fond de la bâche au circuit primaire au-dessus du niveau haut du cœur, le fond de la bâche étant disposé au-dessus du niveau haut du cœur.

Grâce à ce dispositif, la vapeur produite lors de la décompression accélérée du circuit primaire est acheminée jusqu'à la bâche par la tuyauterie de décharge où elle est condensée et recueillie par barbotage dans l'eau contenue dans la bâche. Une circulation naturelle par convection s'établit dès la fin de dépressurisation du circuit primaire entre la bâche et le circuit primaire du réacteur par la seconde tuyauterie, de telle sorte que l'eau boriquée en partie réchauffée par la vapeur est constamment injectée dans le cœur du réacteur, permettant éventuellement d'éviter la mise en route, voire de supprimer les autres dispositifs d'injection de secours avec les inconvénients qu'ils comportent.

Conformément à un autre aspect de l'invention, chacune des tuyauteries est contrôlée de préférence par une vanne ou un clapet.

Conformément à encore un autre aspect de l'invention, le dispositif comprend de plus un circuit de réfrigération comportant un échangeur de chaleur disposé à l'intérieur de la bâche pour refroidir l'eau de la bâche. De préférence, l'échangeur de chaleur est disposé partiellement au-dessus du niveau de l'eau, de façon à participer à la condensation de la vapeur.

Dans le cas où le réacteur comprend au moins un pressuriseur disposé dans le circuit primaire et équipé d'un circuit de décharge, le circuit de décharge du pressuriseur peut être relié directement à la partie basse de la bâche, ce qui permet de perdre le moins d'eau possible lors d'une dépressurisation par surpression entraînant l'ouverture des vannes de décharge ou des soupapes de rûreté du pressuriseur. Le circuit de décharge du pressuriseur peut alors communiquer avec la tuyauterie de décharge par un clapet anti-retour.

La partie supérieure de la bâche peut communiquer par une conduite d'évacuation avec une station de traitement des effluents.

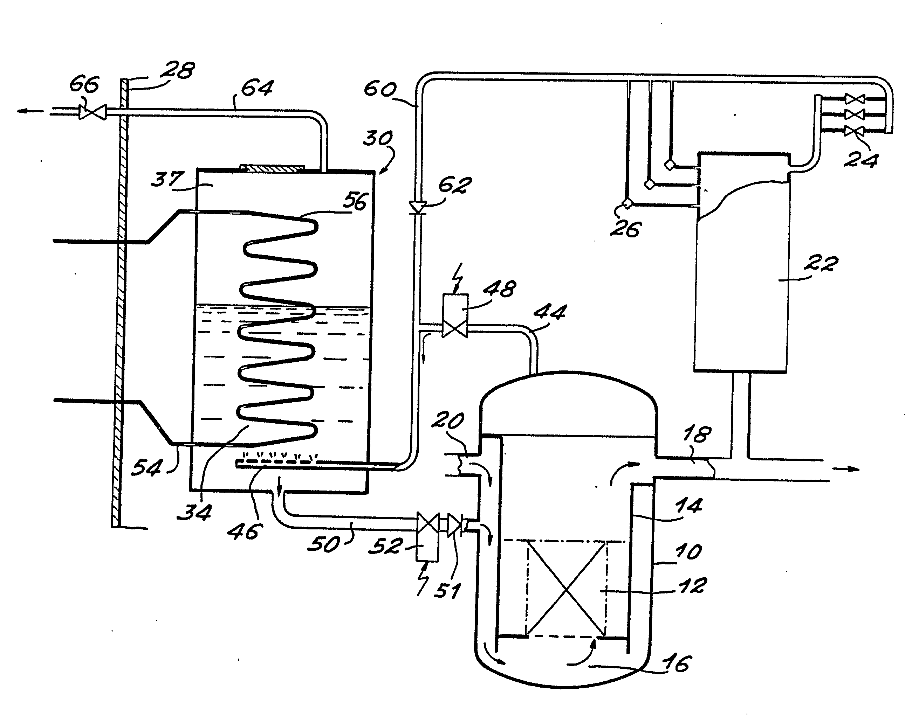

On décrira maintenant, à titre d'exemple non limitatif, un mode de réalisation particulier de l'invention, en se référant au dessin annexé, dans lequel la figure unique représente de façon schématique l'enceinte étanche d'un réacteur nucléaire à eau pressurisée dont le circuit primaire comprend un pressuriseur, ce réacteur étant équipé d'un dispositif de refroidissement rapide réalisé conformément aux enseignements de la présente invention.

On a représenté très schématiquement sur la figure la cuve 10 d'un réacteur nucléaire à eau pressurisée dont le cœur 12, disposé à l'intérieur de la cuve 10, est supporté par une virole 14. Le cœur du réacteur est parcouru par un fluide de refroidissement 16 qui circule dans le sens des flèches. Le fluide de refroidissement 16, constitué généralement par de l'eau sous pression dans ce type de réacteurs, assure l'extraction des calories dégagées par la fission nucléaire dans le cœur du réacteur et le transfert de ces calories jusqu'à des générateurs de vapeur (non représentés) par un circuit primaire. Le circuit primaire est constitué par plusieurs boucles dont seules une branche chaude 18 et une branche froide 20 sont représentées partiellement sur la figure. Un pressuriseur 22, en liaison avec la branche chaude 18, est équipé de vannes de décharge 24 et de soupapes de sûreté 26. Le réacteur représenté sur la figure est disposé à l'intérieur d'une enceinte de confinement représentée partiellement en 28.

Conformément à l'invention, une bâche 30, basse pression, remplie partiellement d'eau boriquée 34, est également disposée à l'intérieur de l'enceinte de confinement 28, à un niveau tel que le fond de la bâche soit situé au-dessus du niveau haut du cœur 12 du réacteur.

Dans le mode de réalisation représenté, la bâche 30 communique avec la partie haute de la cuve 10 du réacteur par une tuyauterie de décharge 44. Plus précisément, la tuyauterie 44 est reliée à une rampe de barboteurs 46 située dans la partie inférieure de la bâche 30. La communication entre la partie haute de la cuve 10 et la rampe de barboteurs 46 est contrôlée par une électrovanne 48. Cette disposition est particulièrement adaptée dans le cas où les générateurs de vapeur (non représentés) disposés dans chacune des boucles du circuit primaire du réacteur sont des générateurs à tubes en U renversés. Lorsque les générateurs de vapeur du circuit primaire sont des générateurs du type «à simple passe», dans lesquels le fluide primaire pénètre dans le générateur à sa partie supérieure et en ressort à sa partie inférieure, la bâche 30 est de préférence aussi reliée aux parties hautes des branches chaudes 18 du circuit primaire, plutôt que directement à la cuve du réacteur. La bâche 30 est reliée à la cuve 10 du réacteur par une tuyauterie 50. Plus précisément, la tuyauterie 50 débouche dans la paroi latérale de la cuve 10 à un niveau légèrement supérieur au niveau haut du cœur 12. La communication entre la bâche 30 et la cuve 10 par la tuyauterie 50 est contrôlée par un clapet anti-retour 51 et éventuellement par une électrovanne 52 commandée de préférence conjointement avec l'électrovanne 48.

Le dispositif selon l'invention comprend de plus un circuit de réfrigération 54 comportant un échangeur de chaleur 56, en forme de serpentin, disposé à l'intérieur de la bâche 30. Un fluide caloporteur circule en cas de besoin dans le circuit de réfrigération 54 afin d'assurer le refroidissement de l'eau 34 contenue dans la bâche 30. En outre, une partie de l'échangeur 56 est disposée au-dessus du niveau de l'eau 34 dans la bâche 30, de telle sorte que le circuit de réfrigération 54 participe à la condensation de la vapeur s'échappant par la rampe de barboteurs 46, comme on le verra par la suite.

De préférence, et comme le montre la figure, les vannes de décharge 24 et les soupapes de sûreté 26 du pressuriseur 22 communiquent avec la tuyauterie de décharge 44 en aval de la vanne 48 par une tuyauterie 60 contrôlée par un clapet anti-retour 62.

Enfin, il est possible d'évacuer vers une station de traitement des effluents (non représentée) les éléments non condensables provenant du pressuriseur 22 ou de la cuve 10 du réacteur. Ces effluents incondensables sont acheminés jusqu'à la station de traitement par une tuyauterie 64 débouchant à la partie supérieure de la bâche 30. La communication entre la bâche 30 et la station de traitement des effluents est contrôlée par une vanne 66 disposée de préférence à l'extérieur de l'enceinte de confinement 28, et fermée pendant le fonctionnement normal du réacteur.

Le fonctionnement du réacteur à eau pressurisée décrit partiellement en se référant à la figure unique est identique en régime normal au fonctionnement des réacteurs connus de ce type et ne sera pas décrit dans la présente demande.

Lorsqu'une dépressurisation brutale du circuit primaire intervient, en raison d'un accident tel qu'une brèche dans le circuit primaire, on a vu que les assemblages contenus dans le cœur 12 du réacteur continuent après l'arrêt d'urgence du réacteur, à dissiper de l'énergie sous forme de chaleur. Cette énergie sert à vaporiser le liquide contenu dans le cœur, la vapeur s'accumulant dans les parties hautes du circuit primaire. Dans les réacteurs à eau pressurisée connus, cette vapeur perturbe les systèmes d'injection de secours et de renoyage du cœur. Conformément à l'invention, la vapeur sous pression est évacuée par la tuyauterie de décharge 44 et le refroidissement du cœur en est accéléré. En effet, les électrovannes 48 et 52 sont ouvertes simultanément dès qu'une dépressurisation intervient dans le circuit primaire du réacteur. La vapeur qui se forme dans la partie haute de la cuve 10 se trouve donc évacuée par la tuyauterie de décharge 44 et débouche par la rampe de barboteurs 46 dans la bâche 30. La vapeur qui s'échappe par la rampe 46 se condense par barbotage dans l'eau boriquée 34, celle-ci pouvant être refroidie simultanément au moyen du circuit de réfrigération 54. Le volume de la bâche 30 et le niveau de l'eau boriquée 34 dans cette bâche sont calculés de telle sorte que toute la vapeur formée dans la cuve 10 du réacteur puisse y être condensée, de façon à ramener la température de l'eau dans la cuve à 100 °C. Cependant, en cas de dépressurisation particulièrement brutale, il est possible qu'une partie de la vapeur formée dans la cuve du réacteur ne se condense pas par barbotage dans l'eau boriquée contenue dans le réservoir interne de la bâche et parvienne jusqu'à la partie supérieure de ce réservoir. Cette vapeur en excès est alors condensée par le circuit de réfrigération 54, dont l'échangeur 56 est disposé en partie au-dessus du niveau de l'eau boriquée 34.

En fin de dépressurisation, lorsque l'équilibre des pressions entre circuit primaire et bâche est réalisé, il s'établit par convection une circulation naturelle de l'eau boriquée 34 contenue dans la bâche 30 vers la cuve 10 du réacteur. Cette circulation, qui s'effectue par la tuyauterie 50, permet de noyer le cœur du réacteur et d'assurer une évacuation de l'énergie calorifique dissipée par les assemblages combustibles.

Dans le mode de réalisation représenté sur la figure, lorsque la dépressurisation du circuit primaire est due à une surpression entraînant l'ouverture des vannes de décharge 24 ou des soupapes de sûreté 26 du pressuriseur 22, la vapeur d'eau ainsi évacuée du circuit primaire est acheminée directement par la tuyauterie 60 et le clapet anti-retour 62 jusqu'à la tuyauterie de décharge 44 en aval de l'électrovanne 48, c'est-à-dire jusqu'à la rampe de barboteurs 46 de la bâche 30. Il est ainsi possible de récupérer la majeure partie de l'eau contenue dans le circuit primaire.

Enfin, la tuyauterie 64 qui relie la bâche 30 à une station de traitement des effluents permet d'évacuer vers cette station les éléments incondensables provenant du pressuriseur 22 ou de la cuve 10 du réacteur, après ouverture de la vanne 66.

Bien entendu, l'invention n'est pas limitée au mode de réalisation qui vient d'être décrit à titre d'exemple, mais en couvre toutes les variantes. Ainsi, comme il a été mentionné, la tuyauterie de décharge 44 qui relie la bâche 30 au circuit primaire du réacteur peut être raccordée soit seulement à la partie haute de la cuve 10 comme l'illustre la figure, notamment lorsque les générateurs de vapeur du circuit primaire sont des générateurs du type à tubes en U renversés, soit aussi aux parties hautes des branches chaudes 18 du circuit primaire notamment lorsque les générateurs de vapeur sont des générateurs du type «à simple passe». De même, la structure particulière de la bâche 30 qui vient d'être décrite n'est pas limitative.

## Revendications

1. Dispositif de refroidissement du cœur d'un réacteur nucléaire à eau pressurisée, dans lequel le cœur (12) du réacteur est disposé à l'intérieur d'une cuve étanche (10) communiquant par un circuit de refroidissement primaire (18, 20) avec au moins un générateur de vapeur, ce dispositif comprenant une bâche basse pression (30) remplie partiellement d'eau boriquée (34), une tuyauterie de décharge (44) reliant la partie haute de la cuve à la partie basse de la bâche, la tuyauterie de décharge étant reliée à une rampe de barboteurs (46) disposée dans la partie inférieure de la bâche, caractérisé en ce que le fond de la bâche est disposé au-dessus du niveau haut du cœur, une seconde tuyauterie (50) reliant le fond de la bâche à la cuve au-dessus du niveau haut du cœur.

2. Dispositif selon la revendication 1, caractérisé en ce que la tuyauterie de décharge (44) est contrôlée par une vanne (48) et la seconde tuyauterie (50) par un clapet (51) et éventuellement une vanne (52).

3. Dispositif selon l'une quelconque des revendications précédentes, caractérisé en ce qu'il comprend de plus un circuit de réfrigération (54) comportant un échangeur de chaleur (56) disposé à l'intérieur de la bâche (30).

4. Dispositif selon la revendication 3, caractérisé en ce que l'échangeur de chaleur (56) est disposé en partie au-dessus du niveau de l'eau (34) contenue dans la bâche.

5. Dispositif selon l'une quelconque des revendications précédentes, dans lequel le réacteur comprend au moins un pressuriseur (22) disposé dans le circuit primaire et équipé d'un circuit de décharge (60), caractérisé en ce que le circuit de décharge du pressuriseur est relié directement à la rampe de barboteurs (46) de la bâche (30).

6. Dispositif selon la revendication 5, caractérisé en ce que le circuit de décharge (60) du pressuriseur communique avec la tuyauterie de dépressurisation (44) par un clapet anti-retour (62).

7. Dispositif selon l'une quelconque des revendications précédentes, caractérisé en ce que la partie supérieure de la bâche (30) communique par une conduite d'évacuation (64) isolable avec une station de traitement des effluents.

8. Dispositif selon l'une quelconque des revendications précédentes, caractérisé en ce que la tuyauterie de décharge (44) relie aussi les parties hautes des branches chaudes du circuit primaire à la partie basse de la bâche.

## Claims

1. Emergency cooling device for the core of a pressurized water nuclear reactor, in which the reactor core (12) is located in the interior of a sealed pressure vessel (10) communicating through a primary cooling circuit (18, 20) with at least one steam generator, said device comprising a low pressure tank (30) partly filled with water containing boric acid (34), a discharge conduit (44) connecting the upper part of the pressure vessel to the lower part of the tank, the discharge conduit being connected to a bubbler array (46) disposed in the lower part of the tank, characterized in that the bottom of the tank is located higher than the top of the core, a second conduit (50) connecting the bottom of the tank to the pressure vessel higher than the top of the core.

2. Device according to claim 1, characterized in that the discharge conduit (44) is controlled by a valve and the second conduit (50) is controlled by a stop cock (51) and optionally by a valve (52).

3. Device according to either of the preceding claims, characterized in that it additionally comprises a refrigeration circuit (54) having a heat exchanger (56) located inside the tank (30).

4. Device according to claim 3, characterized in that a part of the heat exchanger (56) is located above the level of the water (34) contained in the tank.

5. Device according to any one of the preceding claims, in which the reactor comprises at least one pressurizer (22) located in the primary circuit and equipped with a discharge circuit (60), characterized in that the discharge circuit of the pressurizer is directly connected to the bubbler array (46) in the tank (30).

6. Device according to claim 5, characterized in that the discharge circuit (60) of the pressurizer communicates with the depressurization conduit (44) by way of a non-return valve (62).

7. Device according to any one of the preceding claims, characterized in that the upper part of the tank (30) communicates, through a closable evacuation conduit (64), with an effluent-treatment station.

8. Device according to any one of the preceding claims, characterized in that the discharge conduit (44) also connects the upper part of the hot branch of the primary circuit with the lower part of the tank.

## Patentansprüche

1. Kühlvorrichtung für den Kern eines Druckwasserreaktors, bei dem der Kern (12) des Reaktors im Inneren eines über einen ersten Kühlkreislauf (18, 20) mit wenigstens einem Dampfgenerator verbundenen, dichten Behälter (10) angeordnet ist, wobei die Vorrichtung einen teilweise mit Bor enthaltendem Wasser (34) gefüllten Niederdruck-Sammelbehälter (30) und eine Auslassrohrleitung (44) umfasst, die den oberen Bereich des Behälters mit dem unteren Bereich des Sammelbehälters verbindet und mit einer im unteren Bereich des Sammelbehälters angeordneten Rührerrampe (46) verbunden ist, dadurch gekennzeichnet, dass der Boden des Sammelbehälters oberhalb der oberen Fläche des Kernes angeordnet ist und dass eine zweite Rohrleitung (50) den Boden des Sammelbehälters mit dem Behälter oberhalb der oberen Fläche des Kernes verbindet.

2. Vorrichtung nach Anspruch 1, dadurch gekennzeichnet, dass die Auslassrohrleitung (44) über ein Ventil (48) und die zweite Rohrleitung (50) über eine Klappe (51) und gegebenenfalls ein Ventil (52) gesteuert ist.

3. Vorrichtung nach irgendeinem der vorhergehenden Ansprüche, dadurch gekennzeichnet, dass die Vorrichtung ferner einen Kühlkreislauf (54) aufweist, der einen im Inneren des Sammelbehälters (30) angeordneten Wärmetauscher (56) umfasst.

4. Vorrichtung nach Anspruch 3, dadurch gekennzeichnet, dass der Wärmetauscher (56) zum Teil oberhalb des Pegels des Wassers (34) angeordnet ist, das in dem Sammelbehälter enthalten ist.

5. Vorrichtung nach irgendeinem der vorhergehenden Ansprüche, wobei der Reaktor wenigstens einen Druckhalter (22) umfasst, der in dem ersten Kreislauf angeordnet und mit einem Auslasskreislauf (60) ausgerüstet ist, dadurch gekennzeichnet, dass der Auslasskreislauf des Druckhalters direkt mit der Rührerrampe (46) des Sammelbehälters (30) verbunden ist.

6. Vorrichtung nach Anspruch 5, dadurch gekennzeichnet, dass der Auslasskreislauf (60) des Druckhalters mit der Rohrleitung zum Druckabbau (44) über eine Rückschlagklappe (62) verbunden ist.

7. Vorrichtung nach irgendeinem der vorhergehenden Ansprüche, dadurch gekennzeichnet, dass der obere Bereich des Sammelbehälters (30) über eine isolierbare Schwemmleitung (64) mit einer Behandlungsstation für die Abgänge vorhanden ist.

8. Vorrichtung nach irgendeinem der vorhergehenden Ansprüche, dadurch gekennzeichnet, dass die Auslassrohrleitung (44) auch die oberen Bereiche der heissen Zweige des ersten Kreislaufes mit dem unteren Bereich des Sammelbehälters verbindet.